# EUROPÄISCHE PATENTSCHRIFT

(11) **EP 3 802 147 B1**
(45) Veröffentlichungstag und Bekanntmachung des Hinweises auf die Patenterteilung: **02.08.2023**
(21) Anmeldenummer: 19729001.8
(22) Anmeldetag: 07.06.2019
(51) Int. Cl.: B44C 1/24, B44C 5/04, E04F 15/02

(54) **VERFAHREN ZUR VEREDLUNG EINER GROSSFORMATIG BEREITGESTELLTEN BAUPLATTE**
METHOD FOR REFINING A LARGE FORMAT BUILDING PANEL
PROCÉDÉ DE FINISSAGE D'UN PANNEAU DE CONSTRUCTION DE GRAND FORMAT

(30) Priorität: 08.06.2018 EP 18176817
(43) Veröffentlichungstag der Anmeldung: 14.04.2021
(73) Patentinhaber: Flooring Technologies Ltd., Kalkara SCM1001 (MT)
(72) Erfinder: BRAUN, Roger, 6130 Willisau (CH); OLDORFF, Frank, 19057 Schwerin (DE); LEHNHOFF, Ingo, 18347 Dierhagen (DE); KALWA, Norbert, 32805 Horn-Bad Meinberg (DE); KLUPSCH, Rüdiger, 16909 Heiligengrabe (DE)
(74) Vertreter: Gramm, Lins & Partner Patent- und Rechtsanwälte PartGmbB
(86) Internationale Anmeldenummer: PCT/EP2019/065013
(87) Internationale Veröffentlichungsnummer: WO 2019/234239

(56) Entgegenhaltungen:
- EP-A1- 3 059 020
- EP-A2- 2 905 135
- EP-B1- 3 023 261
- WO-A1-2016/180643
- DE-A1-102008 012 220

## Beschreibung

Die Erfindung betrifft ein Verfahren zur Veredlung einer großformatig bereitgestellten Bauplatte aus HDF mit einer Oberseite und einer Unterseite mit folgenden Schritten: a) in einem ersten Prägeschritt wird mindestens in die Oberseite ein Relief als mindestens eine streifenförmige Vertiefung mit einer Tiefe geprägt, b) auf die Oberseite wird ein Dekorpapier aufgebracht, c) auf das Dekorpapier wird ein Overlaypapier als abriebfeste Schicht aufgebracht, d) die Unterseite wird mit einem Gegenzug versehen, e) der so vorbereitete Aufbau wird einer Presse zugeführt und unter hohem Druck und hoher Temperatur verpresst, und f) während des Verpressens wird in einem zweiten Prägeschritt erneut in die mindestens eine streifenförmige Vertiefung geprägt, ohne dabei die Tiefe zu verändern..

Ein solches Verfahren ist beispielsweise aus der EP 2 905 135 A2 bekannt.

Die EP 1 820 640 B1 beschreibt ein Verfahren zur Veredelung einer großformatig bereitgestellten Bauplatte aus MDF in deren Oberseite eine Struktur oder ein Relief eingeprägt, auf die geprägte Oberseite ein Dekor aufgebracht und das Dekor anschließend mit einer abriebfesten Schicht versiegelt wird.

Die EP 3 023 261 B1 offenbart ein Verfahren zum Veredeln einer Holzwerkstoffplatte mit einer Oberseite und einer Unterseite, indem zumindest auf die Oberseite oder die Unterseite zunächst eine Schicht aus flüssigem Kunstharz aufgetragen wird, dann wenigstens eine mit einem Kunstharz getränkte Papierlage aufgelegt wird und dieser Aufbau anschließend in einer Presse unter hohem Druck und hoher Temperatur verpresst wird, wobei das Harz aufschmilzt und sich mit der Holzwerkstoffplatte verbindet.

Derartige Bauplatten werden nach dem Veredeln in einzelne Paneele aufgeteilt und beispielsweise als Fußbodenpaneele oder als Wand- und Deckenpaneele verwendet und sind häufig mit einem Holz-, Stein- oder Fantasiedekor mit überlagerter, dreidimensionaler Oberfläche versehen. Die aufgeteilten Paneele weisen Verbindungsmittel (Nut und Feder) auf und sind meist mit Verriegelungsmitteln zum Verriegeln benachbarter Platten in horizontaler und vertikaler Richtung ausgestattet (sogenannte Klickpaneele). Durch die Überlagerung von Dekor und dreidimensionaler Oberfläche entsteht ein realistischer optischer und haptischer Eindruck des imitierten Werkstoffes.

Insbesondere bei Fußbodenpaneelen ist bekannt, dass diese mindestens auf der Oberseite beschichtet sind und eine an das Dekor angepasste Struktur aufweisen. Eine solche Struktur wird als dekorsynchrone Struktur (embossed register) bezeichnet. Das Dekor liegt dabei entweder als eine auf die Trägerplatte aufkaschierte Papierlage oder als eine direkt auf die Trägerplatte aufgedruckte Farbschicht vor. Das Dekor ist zudem mit einer verschleißhemmenden Schicht versehen. Dazu werden entweder abriebfeste Papierlagen, sogenannte Overlays, oder nach dem Aushärten abriebfeste Lack- bzw. Harzschichten verwendet. Die dekorsynchrone Struktur liegt als eine dreidimensionale Oberflächenstruktur vor und wird mittels eines entsprechend dreidimensional strukturierten Pressblechs in die Plattenoberfläche eingeprägt. Dabei schmelzen und verlaufen die thermischen und unter Druck aktivierbaren Bestandteile der Beschichtung und füllen die dreidimensionale Strukturprägung unter Aushärtung aus. Die Struktur weist üblicherweise eine Höhe von bis zu 500 µm auf. Die Anzahl und die Tiefe der Strukturen sind zum einen durch die verfügbare Menge an aktivierbaren Bestandteilen und zum anderen durch die Presskraft begrenzt.

Bei Laminatfußböden sind die Stoßkanten, an denen benachbarte Fußbodenpaneele aneinanderstoßen problematisch. Je nach Lichteinfall verursachen schon kleinste Höhenunterschiede optisch unschöne Schattenbildungen, die das Gesamtbild eines Fußbodens negativ beeinträchtigen. Durch den Kern aus Holzwerkstoff sind die Paneele außerdem feuchtigkeitsempfindlich. Auf dem Fußboden verschüttete Flüssigkeit muss schnellstmöglich weggewischt werden, um ein Eindringen der Flüssigkeit in die Verbindungsfuge zwischen den Stoßkanten zu vermeiden. Dringt Wasser ein, können sich die Holzfasern in der Trägerplatte ausdehnen und irreversible Quellungen erzeugen, da der Quelldruck des Holzes das Gefüge und/oder der Klebstoff - partiell hydrolisiert werden. Aus diesem Grund ist es wichtig, dass schon bei der Herstellung der Paneele den späteren Stoßkanten eine besondere Aufmerksamkeit gewidmet wird. Benachbarte Paneele sollen fest aneinander liegen können, es soll sich ein optisch gleichmäßiges Erscheinungsbild zu einem Fußboden verlegter Paneele ergeben und es muss Vorsorge getroffen werden, dass verschüttete Flüssigkeit nicht sofort in die Verbindungsfugen fließen kann.

Die WO 2016/180643 A1 beschreibt ein Verfahren zur Herstellung von Fußbodenpaneelen, die mit Verriegelungsprofilen zum mechanischen Verriegeln gleichartiger Paneele miteinander versehen sind, wobei zwei miteinander verriegelte Paneele eine gemeinsame Fuge an der Oberseite bilden.

Die DE 10 2008 008 240 A1 offenbart eine Trägerplatte, auf deren Oberseite vor dem Beschichten Wasser aufgebracht wird, das einzieht und beim anschließenden Verpressen einen Dampfstoß bewirkt, wodurch sich die oberste Schicht sehr schnell erwärmt. Die Wärme und die Feuchte bewirken eine bessere plastische Verformbarkeit und ermöglichen dadurch das Einprägen tieferer Pressblechstrukturen. Durch die Feuchtigkeit wird außerdem bewirkt, dass der Wärmeübergang von den Pressblechen der Kurztaktpresse in die Holzwerkstoffplatte besser wird.

In der EP 3 059 020 A1 wird die Behandlung einer Holzwerkstoffplatte mit Wasserdampf beschrieben, der eine Temperatur bis zu 60°C haben kann. Diese Behandlung soll ein möglichst einheitliches feuchtes Niveau der Trägerplatte bewirken, um die Grundierung für die Bedruckung zu verbessern. Hierzu wird die befeuchtete Oberseite zunächst geschliffen und anschließend auf eine Temperatur von ca. 45°C vorgewärmt. Daran schließt sich ein erster Harzauftrag als Walzgrund an. Auf diesen Walzgrund wird eine weiße Grundierung aufgewalzt.

Von dieser Problemstellung ausgehend soll das eingangs beschriebene Verfahren entsprechend verbessert werden.

Um die vorgenannten Nachteile zu vermeiden, zeichnet sich das gattungsgemäße Verfahren dadurch aus, dass
f) auf das Dekorpapier, dort, wo es in den Bodenwandungen der mindestens einen Vertiefung zur Anlage gelangt, Markierungen aufgedruckt sind, die aus Linien, Kreisen, Punkten, Kreuzen oder graphischen Zeichen bestehen können,
g) die Oberseite noch mit einer Presshaut versehen ist, die eine Dicke von 0,3 bis 0,5 mm aufweist,
h) die Rohdichte der Bauplatte in der die Oberseite ausbildenden Deckschicht zwischen 950 und 1.000 kg/m3 beträgt,
i) die Unterseite vor dem Verpressen mit einem Gegenzug versehen wird,
j) die Bauplatte vor dem Prägen mittels Wasserdampfs erhitzt wird, bis sich eine Oberflächentemperatur von 30 bis 50 °C einstellt,
k) vor dem oder unmittelbar im Anschluss an das Prägen auf die Oberseite ein wässriges Melaminharz als Vergütungsmittel aufgebracht wird, und
l) die Presse eine Kurztaktpresse mit Druck und Temperatur ist.

Entlang der geprägten Vertiefungen erfolgt später die Aufteilung der großformatigen Platte in einzelne Paneele. Durch die geprägten Vertiefungen ist dann die Oberseite der Paneele an den Seitenkanten abgesenkt. Die Stoßkanten aneinander angrenzender Paneele liegen gegenüber der Oberseite also tiefer. Höhenversatz kann in einem solchen Fall keine Schattenbildung verursachen, die optisch auffällt, weil alle Stoßfugen abgesenkt sind. Durch eine entsprechende Kantenprofilierung kann eine feste Verbindung zwischen benachbarten Paneelen erzielt werden, wodurch das zu schnelle Eindringen von Flüssigkeit in die Stoßfuge wirksam vermieden wird.

Das Verpressen des Aufbaus in der Kurztaktpresse erfolgt unter hohem Druck und hoher Temperatur. Die denkbare Spanne des Drucks reicht von 40 bis 100 kg/cm², wobei bei älteren Kurztaktpressen 40 kg/cm² Standard ist. Neuere Anlagen erreichen 60 oder sogar 80 kg/cm². Kurztaktpressen, die mit einem Druck von 100 kg/cm² arbeiten sind aber bekannt. Die Temperatur der Heizplatten in der Kurztaktpresse liegt bei 180 bis 200 °C.

Um die Seitenkanten der Paneele umlaufend absenken zu können, wird vorzugsweise mindestens eine weitere in einen Winkel quer zu der mindestens einen Vertiefung verlaufende Vertiefung eingeprägt. Bevorzugt werden auch hier eine Mehrzahl quer laufender Vertiefungen eingeprägt, entlang derer die Aufteilung der Paneele dann in Querrichtung erfolgen kann.

Es ist vorgesehen, dass der Rohdichteprofil (Verlauf der Dichte über den Querschnitt der Platte) der HDF-Platte gegenüber einem üblichen Rohdichteprofil, wie es beispielsweise aus der EP 3 023 261 B1 bekannt ist, abgesenkt wird. Beim Verpressen des Faserkuchens zu einer Bauplatte gewünschter Dicke ergibt sich die größte Rohdichte im Bereich der Oberseite und der Unterseite der Platte. Durch den Hitzeeintrag beim Verpressen bildet sich an der Oberseite und der Unterseite eine Presshaut aus, die auch "Verrottungsschicht" genannt wird. Die Platte kann, da sie mit einer maximalen Rohdichte in den Deckschichten von 950 - 1000 kg/m³ gepresst wurde, pressblank bereitgestellt werden, das heißt, die Presshaut wird nicht entfernt. Es ist aber auch möglich, zur Reduzierung der Dichte an der Oberseite die Presshaut zumindest teilweise, beispielsweise auf eine Dicke von 0,3 - 0,5 mm, abzuschleifen.

Vor dem oder im Anschluss an das Prägen vor dem Auflegen des Dekorpapiers wird auf die Oberseite ein Vergütungsmittel aufgebracht, das ein wässriges Melaminharz ist. Durch das Vergütungsmittel wird erreicht, dass die zuvor reduzierte Rohdichte an der Oberseite (in der Deckschicht) wieder erhöht wird, um ausreichende Festigkeitseigenschaften an den späteren Paneelen zu erzielen.

Zur Erleichterung des Prägens wird die Bauplatte auf 30 bis 50°C erwärmt und beim Prägen der mindestens einen Vertiefung stellt sich eine Oberflächentemperatur von bis zu 220°C ein. Das Erwärmen der Bauplatte kann mittels Wasserdampfs erfolgen.

Der erste Prägeschritt kann mittels mindestens einer Kalanderwalze durchgeführt werden. Dies hat den Vorteil, dass der Prägeschritt in die Produktionslinie integriert werden kann. Das Prägen kann sich dann unmittelbar an das Verpressen der Holzwerkstoffplatte in einer Kontipresse, in der der zuvor gestreute Faserkuchen zu einer Platte gewünschter Dicke verpresst wurde, anschließen. Der erste Prägeschritt kann aber auch in einer Kurztaktpresse erfolgen, in der das obere Pressblech mit leistenförmigen Erhöhungen versehen wird.

Sofern gewünscht, können unter das Dekorpapier eine oder mehrere Papierlagen als Underlay aufgebracht werden. Diese Papierlagen sind wie das Dekorpapier mit einem Melaminharz getränkt.

Nach Fertigstellung des Aufbaus, der mindestens aus einer Grundierung, dem Dekorpapier, dem Overlay, und einem an der Unterseite angeordneten Gegenzug besteht, wird die Bauplatte in einer Kurztaktpresse unter hohem Druck und hoher Temperatur laminiert und dabei wird in einem zweiten Prägeschritt erneut in die mindestens eine streifenförmige Vertiefung geprägt, um die Ausbildung der Seitenwandungen zu erzielen, ohne die Lage der Bodenwandung in der Tiefe zu verändern. Durch die Beschichtung mit den Papieren werden die im ersten Prägeschritt ausgebildeten Seitenwandungen "verrundet", sodass durch den zweiten Prägeschritt diese Verrundungen wieder in eine plane Oberfläche überführt werden. Wenn gewünscht, besteht dieser Aufbau auch noch aus den unter dem Dekorpapier angeordneten Underlaypapieren.

Wenn das Vergütungsmittel vor dem ersten Prägeschritt aufgebracht wurde, und im ersten Prägeschritt eine ausreichend hohe Temperatur erzielt wird, härtet das Melaminharz bereits während des ersten Prägeschrittes aus und erhöht die Rohdichte. Wird das Vergütungsmittel nach dem ersten Prägeschritt aufgetragen, härtet es während des zweiten Prägeschritts in der Kurztaktpresse aus. Dasselbe gilt auch in dem Fall, wenn im ersten Prägeschritt keine ausreichend hohe Temperatur erzielt wird.

Die Tiefe der mindestens einen Vertiefung beträgt vorzugsweise bis zu 0,7 mm und kann insbesondere abgestuft sein, sodass die Bodenwandung stufenförmig ausgebildet ist. In einem solchen Fall werden mehrere erste Pressschritte mit unterschiedlichen Presstiefen durchgeführt.

Um die Bauplatte während der anschließenden weiteren Bearbeitungsschritte ausrichten zu können, sind auf das Dekorpapier dort, wo es in den Bodenwandungen der mindestens einen Vertiefung zur Anlage gelangt, Markierungen aufgedruckt, die aus Linien, Kreisen, Punkten, Kreuzen oder sonstigen grafischen Zeichen bestehen können. Bevorzugt werden Linien verwendet. Anstelle aufgedruckter Markierungen können im zweiten Prägeschritt auch Markierungen geprägt werden, die als matte oder glänzende Bereiche bzw. geometrische Figuren mit Hilfe des Pressblechs auf die Bauplatte übertragen werden. Über diese Markierungen kann mittels eines Kamerasystems die Bauplatte entweder schon für den zweiten Prägeschritt oder nur für weitere nachfolgende Bearbeitungsschritte ausgerichtet werden. Solche Markierungen können auch am Rand des Dekorpapiers vorgesehen sein, sodass sie sich am äußeren Rand der beschichteten Bauplatte befinden.

Das nochmalige Prägen in die Vertiefung im zweiten Prägeschritt erfolgt vorzugsweise in einer Kurztaktpresse, bei der auf dem Pressblech leistenförmige Erhöhungen aufgebracht sind.

In die Oberseite kann im zweiten Prägeschritt eine Struktur eingeprägt werden, die zumindest teilweise synchron zum Dekor verläuft, was in der Fachsprache "embossed register" genannt wird.

Mit Hilfe einer Zeichnung soll ein Ausführungsbeispiel der Erfindung nachfolgend näher beschrieben werden. Es zeigen:

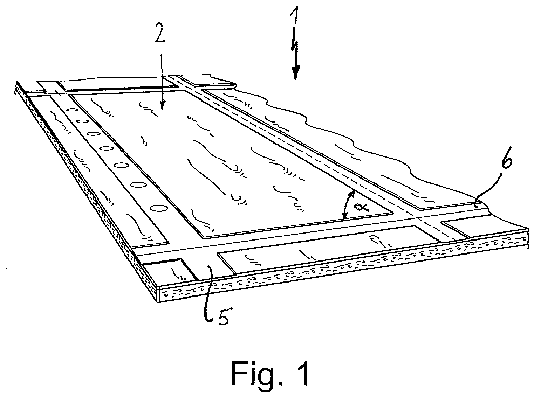

- Figur 1 -: eine perspektivische Teildarstellung einer großformatigen Bauplatte;

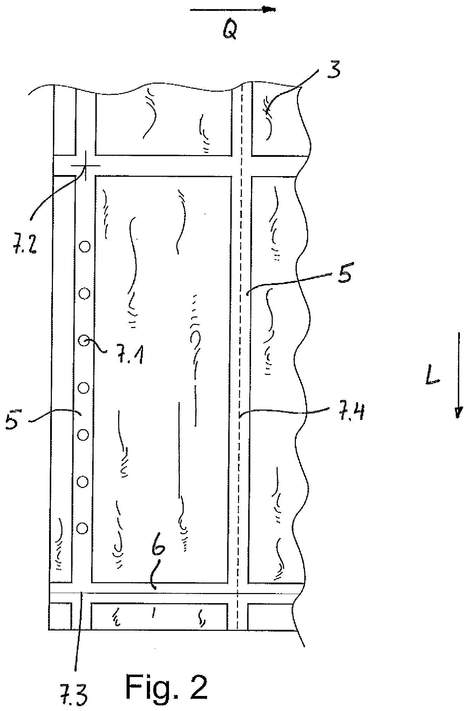

- Figur 2 -: die Draufsicht auf die Bauplatte nach Figur 1;
- Figur 3 -: eine schematische Teildarstellung vor dem zweiten Prägeschritt;
- Figur 4 -: eine vergrößerte Teildarstellung während des zweiten Prägeschrittes;

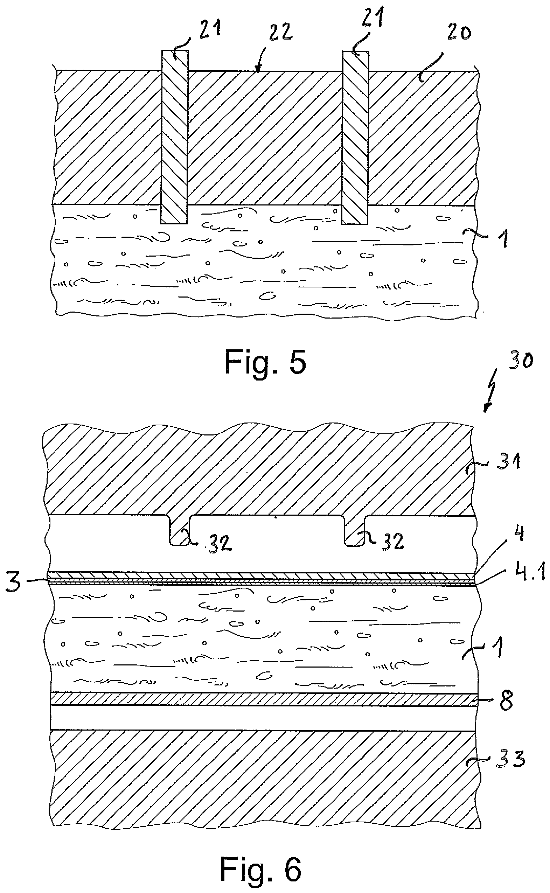

- Figur 5 -: eine schematische Teildarstellung während des ersten Prägeschrittes;
- Figur 6 -: eine schematische Darstellung der in der Kurztaktpresse befindlichen Bauplatte;
- Figur 7 -: ein übliches Rohdichteprofil einer HDF-Platte;
- Figur 8 -: das Rohdichteprofil einer ersten großformatigen Bauplatte;
- Figur 9 -: das Rohdichteprofil einer zweiten großformatigen Bauplatte;

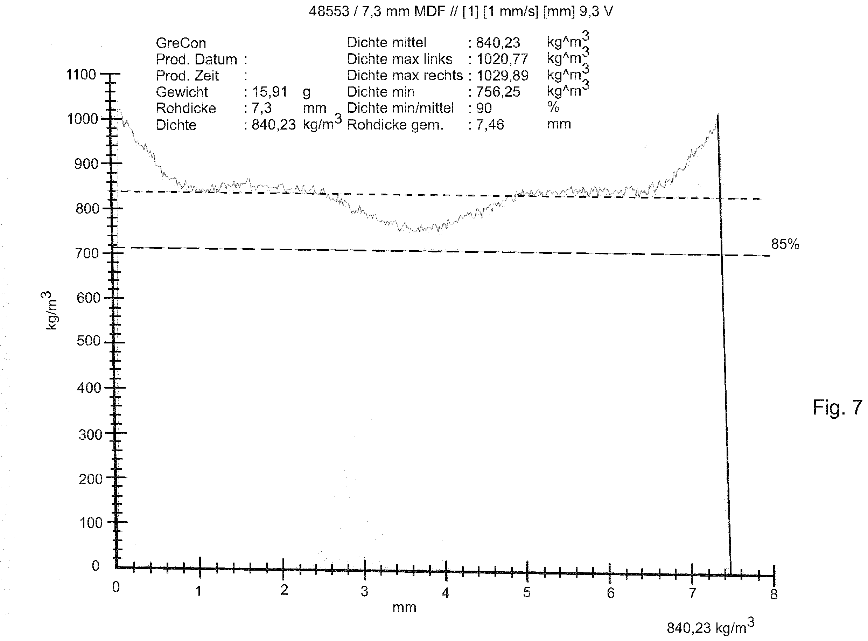

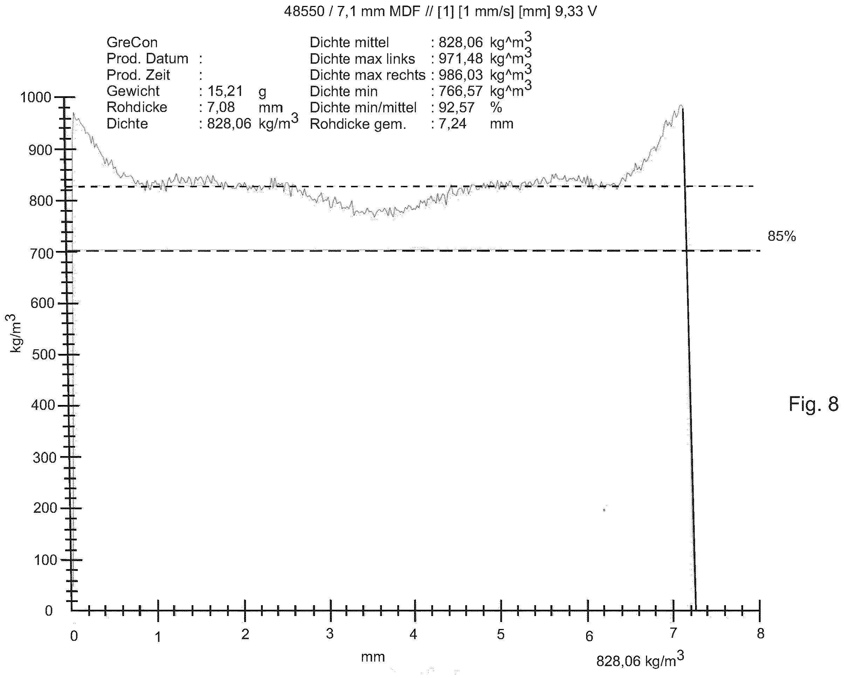

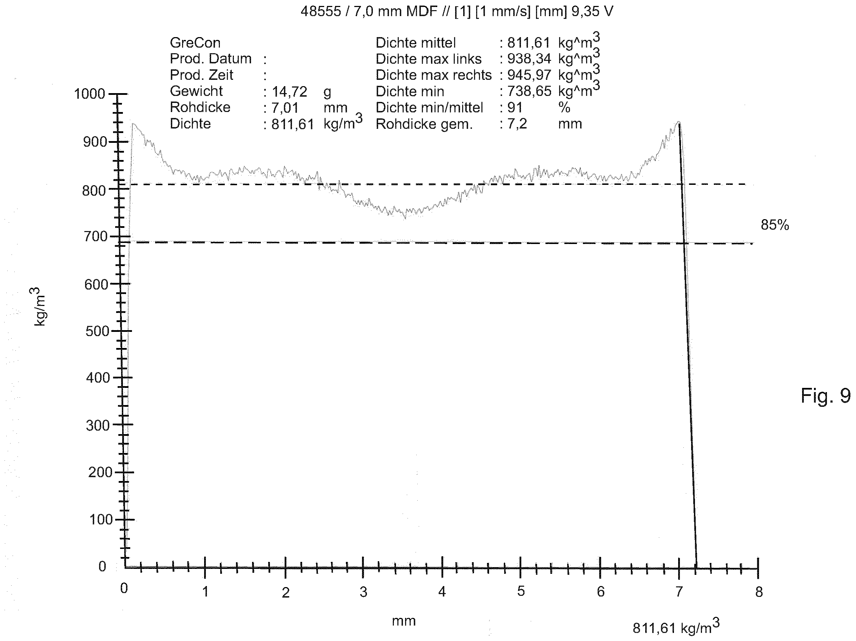

Ausgangsbasis ist eine großformatige HDF-Platte mit einer Länge von 2.800 mm oder 1.860 mm, einer Breite von 2.070 mm und einer Dicke von 7 mm bis 14 mm. Die Rohdichte ist gegenüber einer üblichen HDF-Platte abgesenkt wie ein Vergleich der Figur 7 mit den Figuren 8 und 9 zeigt. Zur Ausbildung einer schwachen Deckschicht, die sich plastisch verformen lässt, wurden die Deckschichtspitzen gegenüber dem Standard um mindestens 40 kg/m³ abgesenkt. Gute Ergebnisse wurden mit einer Absenkung um bis zu 60 kg/m³ erreicht. Die Rohdichte liegt dann im Bereich von 950 bis 1000 kg/m³. Ein Beispiel für das Rohdichteprofil einer herkömmlichen HDF-Platte ist in Figur 7 gezeigt. Figuren 8 und 9 zeigen Beispiele von Rohdichtenprofilen von erfindungsgemäß verwendeten Bauplatten.

Die HDF-Platte kann pressblank, also mit der kompletten Presshaut zur Verfügung gestellt werden. Vorzugsweise wird die Presshaut aber bis auf eine Dicke von etwa 0,3 mm abgeschliffen um die Deckschicht zunächst bewusst "schwach auszubilden".

Um Vertiefungen 5, 6 in die Oberseite 2 der Bauplatte 1 einprägen zu können, wird diese zunächst auf eine Temperatur von 30 bis 50°C mittels Auftrags von 10 bis 30 g/m² Wasserdampf erwärmt. Dann werden als ein Vergütungsmittel 10 bis 50 g/m², vorzugsweise 30 g/m² wässriges Melaminharz aufgetragen. Dabei kann es sich um ein Standard-Tränkharz mit einem Feststoffanteil von 50 bis 65 Gew.%, vorzugsweise 60 Gew.% handeln. Neben Wasser als Lösungsmittel können weitere Zusätze, wie Härter, Netzmittel und ähnliches in der Rezeptur vorhanden sein. Alternativ können als Vergütungsmittel auch UF-Harz oder in Mischungen UF- und Melaminharz verwendet werden. Entweder handelt es sich um ein Postforming Harz oder ein Standard-Tränkharz, das durch Zugabe von Flexibilisierungsmitteln (z. B. 1,4-Butandiol, Caprolactam, Polyglycol usw.) elastischer eingestellt ist. Eine nachträgliche Zugabe des Elastifizierungsmittels sollte in einer Größenordnung von etwa 3 bis 7 Gew.% erfolgen.

Die so vorbehandelte Bauplatte 1 wird unter einer oder mehreren hintereinander angeordneten Kalanderwalzen 20 mit darauf parallel zueinander angeordneten Prägeringen 21 hindurchgeführt. Dabei werden in einem ersten Prägeschritt in die Oberseite 2 über die mindestens zwei Prägeringe 21 in Längsrichtung L und Querrichtung Q verlaufende Vertiefungen 5, 6 mit einer Tiefe T von bis zu 0,7 mm eingeprägt. Der Liniendruck der Prägeringe 21 liegt dabei bei bis zu 300 N/mm und die Oberflächentemperatur liegt bei bis zu 220°C. In diesem ersten Prägeschritt wird das Vergütungsmittel auf der Oberseite 2 zumindest teilweise umgesetzt, härtet also zumindest teilweise aus und erhöht dadurch wieder die Rohdichte. Die Vertiefungen 5, 6 können abgestuft ausgebildet werden, indem beispielsweise mehrere Kalanderwalzen 20 mit unterschiedlichen Prägeringen 21 verwendet werden und beispielsweise zunächst 0,3 mm und anschließend eine weitere Tiefe T von bis zu 0,7 mm geprägt wird.

Wenn der Durchmesser der Kalanderwalze 20 groß genug ist, können auf ihrem Umfang auch parallel zur Achsrichtung verlaufende Stege vorgesehen sein, mit der die Vertiefungen 6 in Querrichtung Q geprägt werden können. Gegebenenfalls kann auch einer Kalanderwalze 20 mit Prägeringen 21 eine Kalanderwalze nachgeordnet sein, die nur in Achsrichtung verlaufende parallele Stege aufweist.

Nach dem ersten Prägeschritt können auf die Oberseite 2 ggf. ein oder mehrere harzgetränkte Papierlagen als Underlay und darauf dann oder nur allein ein Dekorpapier 3 aufgelegt. Das Dekorpapier 3 kann einfarbig oder mehrfarbig sein und wird so aufgebracht, dass es zumindest teilweise synchron zu der erst zuvor eingeprägten Struktur verläuft. Auf dem Dekorpapier 3 können Markierungen 7 vorgesehen sein. Die Markierungen 7 können Kreise 7.1, Kreuze 7.2, Linien 7.3 und Striche 7.4 oder andere geometrische Figuren sein. Über diese Markierungen 7 kann die Bauplatte 2 zur Vornahme weiterer Bearbeitungsschritte über ein Kamerasystem ausgerichtet werden.

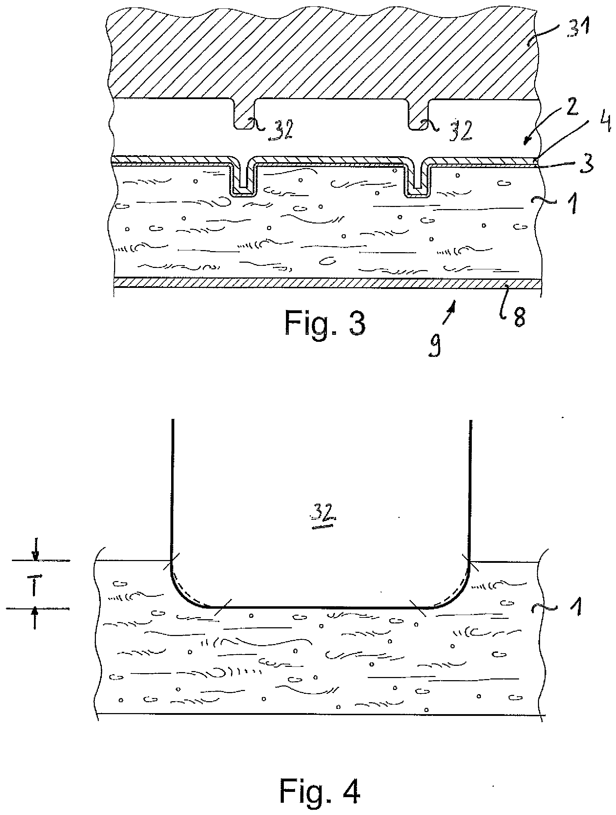

Anschließend wird an die Unterseite 9 der Bauplatte 1 ein Gegenzug 8 und auf das Dekorpapier 3 ein Overlaypapier 4 als abriebfeste Schicht aufgelegt. Dieser Aufbau wird dann einer Kurztaktpresse 30 mit einem oberen Pressblech 31 und einem unteren Pressblech 33 zugeführt. Das obere Pressblech 31 ist mit leistenförmigen Erhöhungen 32 versehen. Über die Markierungen 7 und ein Kamerasystem wird die Bauplatte 1 ausgerichtet, sodass die Erhöhungen 32 beim anschließenden Verpressen des Aufbaus nochmals in die geprägten Vertiefungen 5, 6 eintauchen und die beim Beschichten der Oberseite 2 verrundeten Seitenwandungen der Vertiefungen 5, 6 nochmals prägen, um parallele und plane Seitenwandungen in einem zweiten Prägeschritt einzustellen, ohne dabei die Tiefe T der Vertiefungen 5, 6 bzw. die Lage der Bodenwandungen zu verändern. Wie Figur 4 zeigt, sind die Erhöhungen 32 im Übergangsbereich von den Seitenwandungen zur Bodenwandung größer ausgebildet als die Breite der Vertiefungen 5, 6, um sicher die unteren Kanten der Vertiefungen 5, 6 auszubilden. Zwischen den leistenförmigen Erhöhungen 32 kann das Pressblech 31 mit einer Gravur versehen sein, über die beim Verpressen in die Oberseite des Overlays eine Struktur eingeprägt wird, die zumindest teilweise synchron zu dem Dekor ausgerichtet ist (embossed register).

Durch entsprechende Bearbeitung des Pressblechs 11 können auch auf die Bodenwandungen geometrische Figuren bzw. Linien geprägt werden, die als matte oder glänzende Bereiche auf der Oberfläche abgebildet werden.

Die Presszeit im zweiten Prägeschritt beträgt zwischen 10 und 30 Sekunden, vorzugsweise 12 bis 15 Sekunden, in denen die Harze aufschmelzen und sich mit der Bauplatte 1 verbinden. Die Temperatur der Pressbleche 31, 33 beträgt bis zu 200°C. Der Druckverlauf erfolgt dabei ausgehend von einer Druckaufbauphase in eine Haltephase und eine Druckabbauphase übergehend. Die Prägetiefe T wird dabei im Sinne einer Wegsteuerung erfolgen. Der Druck in der Kurztaktpresse beträgt 40 bis 100 kg/cm². Die Temperatur der Heizplatte, über die die Pressbleche 31, 33 erhitzt werden, beträgt 180 bis 220 °C. Vorzugsweise wird mit einer Temperatur der Heizplatte zwischen 190 und 210 °C gepresst.

Für eine sinnvolle Ausgestaltung müssen im ersten Prägeschritt mindestens zwei in Längsrichtung L und zwei in Querrichtung Q Vertiefungen 5, 6 geprägt werden, damit die Seitenkanten der aufgeteilten Paneele alle abgesenkt sind.

### Bezugszeichenliste

- 1: Bauplatte
- 2: Oberseite
- 3: Dekor
- 4: abriebfeste Schicht / Overlaypapier
- 4.1: Underlay
- 5: Vertiefung

- 6: Vertiefung
- 7: Markierung

- 7.1: Kreise
- 7.2: Kreuz
- 7.3: Linie
- 7.4: Strich
- 8: Gegenzug

- 9: Unterseite
- 20: Kalanderwalze
- 21: Prägering

- 22: Mantel/Umfangsfläche
- 30: Kurztaktpresse
- 31: oberes Pressblech
- 32: leistenförmige Erhöhung
- 33: unteres Pressblech
- α: Winkel
- L: Längsrichtung
- Q: Querrichtung
- T: Tiefe

## Patentansprüche

1. Verfahren zur Veredelung einer bereitgestellten Bauplatte (1) aus HDF mit einer Oberseite (2) und einer Unterseite (9), mit folgenden Schritten:
a) in einem ersten Prägeschritt wird mindestens in die Oberseite (2) ein Relief als mindestens eine eine Bodenwandung aufweisende streifenförmige Vertiefung (5) mit einer Tiefe (T) geprägt,
b) auf die Oberseite (2) wird ein Dekorpapier (3) aufgebracht,
c) auf das Dekorpapier (3) wird ein Overlaypapier (4) als abriebfeste Schicht aufgebracht,
d) der so vorbereitete Aufbau wird einer Presse, zugeführt und verpresst, und
e) während des Verpressens wird in einem zweiten Prägeschritt erneut in die mindestens eine streifenförmige Vertiefung (5) geprägt, ohne dabei die Tiefe (T) zu verändern
**dadurch gekennzeichnet, dass**
f) auf das Dekorpapier, dort, wo es in den Bodenwandungen der mindestens einen Vertiefung zur Anlage gelangt, Markierungen aufgedruckt sind, die aus Linien, Kreisen, Punkten, Kreuzen oder graphischen Zeichen bestehen können,
g) die Oberseite (2) noch mit einer Presshaut versehen ist, die eine Dicke von 0,3 bis 0,5 mm aufweist,
h) die Rohdichte der Bauplatte (1) in der die Oberseite (2) ausbildenden Deckschicht zwischen 950 und 1.000 kg/m³ beträgt,
i) die Unterseite (9) vor dem Verpressen mit einem Gegenzug (8) versehen wird,
j) die Bauplatte (1) vor dem Prägen mittels Wasserdampfs erhitzt wird, bis sich eine Oberflächentemperatur von 30 bis 50 °C einstellt,
k) vor dem oder unmittelbar im Anschluss an das Prägen auf die Oberseite (2) ein wässriges Melaminharz als Vergütungsmittel aufgebracht wird, und
l) die Presse eine Kurztaktpresse (30) mit Druck und Temperatur ist.

2. Verfahren nach Anspruch 1, **dadurch gekennzeichnet, dass** mindestens eine weitere in einem Winkel (α) quer zu der mindestens einen Vertiefung (5) verlaufende Vertiefung (6) eingeprägt wird.

3. Verfahren nach Anspruch 1 oder 2 , **dadurch gekennzeichnet, dass** der erste Prägeschritt mit mindestens einer Prägekalanderwalze (20), die unter Aufbringung eines Druckes von bis zu 300 N/mm² und einer Oberflächentemperatur von bis zu 220°C arbeitet, ausgeführt wird.

4. Verfahren nach Anspruch 1 oder 2 , **dadurch gekennzeichnet, dass** der erste Prägeschritt in einer Kurztaktpresse (30) mit einem tief strukturierten Pressblech (31), vorzugsweise mittels leistenförmiger Erhöhungen (32) auf dem Pressblech (31), durchgeführt wird.

5. Verfahren nach einem der vorstehenden Ansprüche, **dadurch gekennzeichnet, dass** die Tiefe (T) der mindestens einen Vertiefung (5, 6) bis zu 0,7 mm beträgt.

6. Verfahren nach einem der vorstehenden Ansprüche, **dadurch gekennzeichnet, dass** die Tiefe (T) abgestuft ist, sodass die Bodenwandung stufenförmig ausgebildet ist.

7. Verfahren nach einem der vorstehenden Ansprüche, **dadurch gekennzeichnet, dass** auf das im Bereich der Bodenwandung der mindestens einen Vertiefung (5, 6) Markierungen (7.1, 7.2, 7.3, 7.4) geprägt werden.

8. Verfahren nach Anspruch 3, **dadurch gekennzeichnet, dass** das nochmalige Prägen in die Vertiefung (5, 6) im zweiten Prägeschritt mittels leistenförmiger Erhöhungen (32) auf dem Pressblech (31) der Kurztaktpresse (30) erfolgt.

9. Verfahren nach einem der vorstehenden Ansprüche, **dadurch gekennzeichnet, dass** in die Oberseite (2) eine Struktur eingeprägt wird, die zumindest teilweise synchron zum Dekor (3) verläuft.

10. Verfahren nach einem der vorstehenden Ansprüche, **dadurch gekennzeichnet, dass** die Bauplatte (1) in einzelne Paneele aufgeteilt wird indem in und entlang der Vertiefungen (5, 6) jeweils ein Sägeschnitt ausgeführt wird.

## Claims

1. A method for finishing a supplied building panel (1) made of HDF with an upper side (2) and a lower side (9) comprising the following steps:
(a) in a first embossing step, embossing a relief into at least the upper side (2) at a depth (T), said relief being embossed as at least one strip-shaped depression (5) with a bottom wall,
(b) applying a decorative paper (3) to the upper side (2),
(c) applying an overlay paper (4) to the decorative paper (3) as an abrasion-resistant layer,
(d) feeding the structure prepared in this way to a press and pressing it,
(e) during pressing, in a second embossing step, embossing again into the at least one strip-shaped depression (5) without changing the depth (T) in the process,
**characterised in that**
(f) markings are printed onto the decorative paper where it comes to rest in the bottom walls of the at least one depression, wherein said markings can be in the form of lines, circles, dots, crosses or other graphic symbols,
(g) the upper side (2) is provided with a press skin that has a thickness of 0.3 to 0.5 mm,
(h) the bulk thickness of the building panel (1) in the top layer that forms the upper side (2) is between 950 and 1.000 kg/m^{3,}
(i) the lower side (9) is provided with a backing layer (8) before pressing,
(j) the building panel (1) is heated with steam before embossing until a surface temperature of 30 - 50°C is reached,
(k) before or immediately after embossing, an aqueous melamine resin is applied as a tempering agent to the upper side (2), and
(l) the press is a short-cycle press (30) at a pressure and temperature.

2. The method according to claim 1, **characterised in that** at least one further depression (6) extending at an angle (α) transverse to the at least one depression (5) is embossed.

3. The method according to claim 1 or 2, **characterised in that** the first embossing step is carried out with at least one embossing calendar roller (20) which works when a pressure of up to 300 N/mm² and a surface temperature of up to 200°C are applied.

4. The method according to claim 1 or 2, **characterised in that** the first embossing step is carried out in a short-cycle press (30) with a deep-structured press plate (31), preferably by means of strip-shaped elevations (32) on the press plate (31).

5. The method according to one of the preceding claims, **characterised in that** the depth (T) of the at least one depression (5, 6) is up to 0.7mm.

6. The method according to one of the preceding claims, **characterised in that** depth (T) is graduated, so that the bottom wall is designed in the form of steps

7. The method according to one of the preceding claims, **characterised in that** markings (7.1, 7.2, 7.3, 7.4) are embossed on the bottom wall of the at least one depression (5, 6).

8. The method according to claim 3, **characterised in that** the repeated embossing into the depression (5, 6) in the second embossing step is carried out by means of strip-shaped elevations (32) on the press plate (31) of the short-cycle press (30).

9. The method according to one of the preceding claims, **characterised in that** a structure is embossed into the upper side (2) that extends at least partially synchronously to the decorative pattern (3).

10. The method according to one of the preceding claims, **characterised in that** the building panel (1) is split into individual panels by carrying out a saw cut in and along each of the depressions (5, 6).

## Revendications

1. Procédé d'affinage d'un panneau de construction (1) de HDF mis à disposition, présentant une face supérieure (2) et une face inférieure (9), comprenant les étapes suivantes consistant à :
a) dans une première étape d'estampage, estamper au moins dans la face supérieure (2) un relief sous la forme d'au moins un creux (5) réalisé en forme de bande avec une paroi de fond et ayant une profondeur (T),
b) appliquer un papier décor (3) sur la face supérieure (2),
c) appliquer un papier de recouvrement (4) à titre de couche résistante à l'abrasion sur le papier décor (3),
d) amener la structure ainsi préparée à une presse, et la presser,
e) pendant le pressage, dans une deuxième étape d'estampage, estamper à nouveau dans ledit au moins un creux (5) en forme de bande, sans modifier la profondeur (T),
**caractérisé en ce que**
f) des marques, qui peuvent être des lignes, des cercles, des points, des croix ou des signes graphiques, sont imprimées sur le papier décor à l'endroit où il prend appui contre les parois de fond dudit au moins un creux,
g) la face supérieure (2) est encore pourvue d'une peau de pressage qui présente une épaisseur de 0,3 à 0,5 mm,
h) la masse volumique apparente du panneau de construction (1) dans la couche de recouvrement formant la face supérieure (2) est comprise entre 950 et 1000 kg/m³, et
i) avant le pressage, la face inférieure (9) est pourvue d'un élément à contre-traction (8),
j) avant l'estampage, le panneau de construction (1) est chauffé à la vapeur d'eau jusqu'à ce qu'une température de surface de 30 à 50°C soit atteinte,
k) avant ou immédiatement après l'estampage, une résine mélamine aqueuse est appliquée comme agent de traitement sur la face supérieure (2), et
l) la presse est une presse à cycle court (30) sous pression et à température.

2. Procédé selon la revendication 1,
**caractérisé en ce qu'**au moins un autre creux (6) est estampé, qui s'étend selon un angle (α) transversalement audit au moins un creux (5).

3. Procédé selon la revendication 1 ou 2,
**caractérisé en ce que** la première étape d'estampage est réalisée à l'aide d'au moins un rouleau de calandre d'estampage (20) qui fonctionne par application d'une pression allant jusqu'à 300 N/mm² et d'une température de surface allant jusqu'à 220°C.

4. Procédé selon la revendication 1 ou 2,
**caractérisé en ce que** la première étape d'estampage est réalisée dans une presse à cycle court (30) avec une tôle de pressage (31) profondément structurée, de préférence au moyen de bossages (32) en forme de baguette sur la tôle de pressage (31).

5. Procédé selon l'une des revendications précédentes,
**caractérisé en ce que** la profondeur (T) dudit au moins un creux (5, 6) va jusqu'à 0,7 mm.

6. Procédé selon l'une des revendications précédentes,
**caractérisé en ce que** la profondeur (T) est étagée, de sorte que la paroi de fond est réalisée en forme étagée.

7. Procédé selon l'une des revendications précédentes,
**caractérisé en ce que** des marques (7.1, 7.2, 7.3, 7.4) sont estampées au niveau de la paroi de fond dudit au moins un creux (5, 6).

8. Procédé selon la revendication 3,
**caractérisé en ce que** l'estampage supplémentaire dans le creux (5, 6) lors de la deuxième étape d'estampage s'effectue au moyen de bossages (32) en forme de baguette sur la tôle de pressage (31) de la presse à cycle court (30).

9. Procédé selon l'une des revendications précédentes,
**caractérisé en ce qu'**une structure est estampée dans la face supérieure (2), structure qui s'étend de façon au moins partiellement synchrone avec le décor (3).

10. Procédé selon l'une des revendications précédentes,
**caractérisé en ce que** le panneau de construction (1) est divisé en plaques individuelles par sciage respectif dans et le long des creux (5, 6).
